# EUROPEAN PATENT APPLICATION

(11) **EP 2 133 821 A2**
(43) Date of publication of application: **16.12.2009**
(21) Application number: 09007565.6
(22) Date of filing: 08.06.2009
(51) Int. Cl.: G06K 9/20

(54) **Biological feature input device and biological feature input method**

(30) Priority: 12.06.2008 JP 2008154518
(71) Applicant: Nec Corporation, Tokyo 108-8001 (JP)
(72) Inventor: Higuchi, Teruyuki, Tokyo (JP)
(74) Representative: Glawe, Delfs, Moll

(57) **Abstract**

To obtain biological feature information of high authentication accuracy. A biological feature input device includes an imaging device, and a finger guide for guiding the finger to a position at which the image of the finger can be picked up. The finger guide is configured with a finger abutment part which supports a tip side of the finger placed on the finger guide, and a finger holding device which displaces a position of the finger abutment part towards a direction the finger is pointing when the finger is placed on the abutment part. The finger guide is provided with a guide position detecting part which detects the position of the finger abutment part. The imaging device picks up the image of the finger when the abutment part is detected at a position that is set in advance.

## Description

### CROSS-REFERENCE TO RELATED APPLICATION

This application is based upon and claims the benefit of priority from Japanese patent application No. 2008-154518, filed on June 12, 2008, the disclosure of which is incorporated herein in its entirety by reference.

### BACKGROUND OF THE INVENTION

### 1. Field of the Invention

The present invention relates to a biological feature authentication technique which performs individual authentication based on a biological feature obtained by picking up an image of a finger.

### 2. Description of the Related Art

The biological feature authentication technique which authenticates individuals by using a picked-up image of a finger is known as a method which collates a pattern of the outermost layer of the skin such as a fingerprint and a blood vessel pattern with information that is registered in advance. For example, devices such as automated teller machines (ATM) at banks employ a technique which performs individual authentication by using fingerprints or finger blood vessel patterns.

In the meantime, a method which utilizes a fingerprint as a biological feature is disclosed as a related technique of a non-contact type biological feature imaging device (Japanese Unexamined Patent Publication 2003 - 85538: Patent Document 1) .

However, with the aforementioned related technique, there is a distortion generated in a fingerprint because a finger tip of a user is pressed strongly against a finger guide, for example, when picking up an image of the finger. In that case, an image of a distorted fingerprint is to be picked up, so that the authentication accuracy is deteriorated. Further, like the distortion in the fingerprint, there is generated deformation in the shape of finger blood vessels, so that the authentication accuracy is also deteriorated in authentication using the blood vessel pattern.

### SUMMARY OF THE INVENTION

An exemplary object of the present invention is to provide a biological feature input device and a biological feature input method, which make it possible to pick up a finger image of high authentication accuracy through effectively suppressing distortion generated in the finger when picking up images of the fingers.

In order to achieve the foregoing exemplary object, a biological feature input device according to an exemplary aspect of the invention includes an imaging device for picking up an image of a finger and a finger guide for guiding the finger to a position at which the image of the finger can be picked up, wherein: the finger guide is configured with a finger abutment part which supports a tip side of the finger placed on the finger guide, and a finger holding device which supports the finger abutment part and displaces a position of the finger abutment part towards a direction the finger is pointing when the finger is placed on the abutment part; the finger guide is provided with a guide position detecting part which detects the position of the finger abutment part; and the imaging device picks up the image of the finger when the abutment part is detected at a position that is set in advance.

Further, a biological feature input method device according to another exemplary aspect of the invention is a biological feature authentication method which picks up an image of a finger by using a biological feature input device including an imaging device for picking up the image of the finger and a finger guide for guiding the finger to a position to be placed. The method includes: absorbing a pressuring force applied to the finger guide when the finger is placed on the finger guide; detecting a position of the finger guide after absorbing the pressuring force; and picking up the image of the finger, when the finger guide is in an area that is set for picking up the image of the finger.

### BRIEF DESCRIPTION OF THE DRAWINGS

FIG. 1 is a schematic block diagram showing an exemplary embodiment of a biological feature input device according to the present invention;
FIGS. 2A and 2B show illustrations of a finger guide of the biological feature input device disclosed in FIG. 1, in which FIG. 2A is an explanatory illustration of a finger guided on a system main unit viewed from the above, and FIG. 2B is an explanatory illustration of the state of FIG. 2A viewed from the left side of the system main unit;
FIGS. 3A and 3B show the biological feature input device disclosed in FIG. 1, in which FIG. 3A is an explanatory illustration showing a case where a placed finger is guided to an imaging area of an imaging part 10, and FIG. 3B is an explanatory illustration showing a case where the finger guide is pushed by the placed finger into a position that is inappropriate for picking up an image;
FIG. 4 is a schematic block diagram showing an internal structure of the biological feature input device disclosed in FIG. 1; and
FIG. 5 is a flowchart showing entire operations of the biological feature input device disclosed in FIG. 1.

### DETAILED DESCRIPTION OF THE EXEMPLARY EMBODIMENTS

### (EXEMPLARY EMBODIMENT)

Next, an exemplary of the present invention will be described in detail by referring to the accompanying drawings.

A biological feature input device according to the exemplary embodiment is a system for performing individual authentication based on an image of a biological feature such as a fingerprint, a finger blood vessel pattern, or the like of a finger 13.

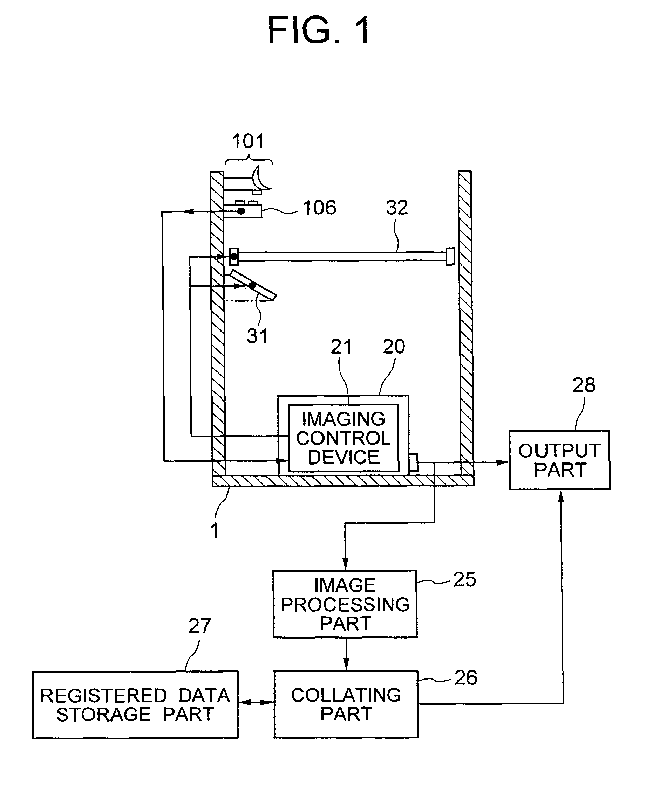

As shown in FIG. 1, the biological feature input device (referred to as "authentication system" hereinafter) 1 is structured, including: a casing-type system main unit 10 whose top face is opened; a finger guide 101 for supporting the finger 13 as an imaging target, which is provided on the inner-side side face of the opening side of the system main unit 10; and an imaging part 20 which picks up an image of the thick of the finger placed on the finger guide 101, which is provided on the bottom face of the inside of the system main unit 10.

Further, on the outer side of the system main unit 10, the authentication system 1 includes: an image processing device 25 which performs image processing on image data transmitted from an AD converting device 24; a collation device 26 which performs collation of the picked up image with an image registered in advance (registered image); a registered data storage device 27 which stores the registered image; and an output part 28 which outputs and displays a result of the collation (authentication judgment result).

Regarding the directions in terms of the finger 13 placed on the finger guide 101 of the embodiment, the side where the fingerprint of the finger 13 is at is expressed as a thick face, and the opposite side of the thick face is expressed as a back face.

Further, regarding the directions of the system main unit 10, the direction from the thick-face side of the finger 13 towards the imaging part 20 is expressed as the lower direction, and the opposite direction (i.e., the direction from the imaging part 20 towards the finger 13) is expressed as the upper direction. Furthermore, as shown in FIG. 1, the finger-tip side of the finger 13 placed in the finger guide 101 is expressed as the forward direction, and the joint side of the finger 13 is expressed as the backward direction. The face between the thick face and the back face of the finger 13 is expressed as a side face, and there are the side faces on both sides (left and right sides) of the finger 13.

FIG. 1 is a schematic block diagram of the system main unit 10 viewed from the left side thereof.

Further, the authentication system 1 includes a position detector supporting device 106 for supporting position detecting devices 105B and 105C to be described later, which is provided on the lower side of the finger guide 101 to be in parallel to the finger guide 101 with a specific distance provided therebetween.

The specific distance is defined to be a distance with which the position detecting devices 105B and 105C can detect the position of a position detection target part 104 to be described later.

Further, the system main unit 10 includes: a fingerprint light source 31 for irradiating the finger 13, which is provided on the forward side of the inside the system main unit 10; and blood-vessel light source 32 for irradiating the finger 13, which is provided on the left and right sides of the inside the system main unit 10, respectively.

The fingerprint light source 31 is desirable to be an LED or the like, which has a wavelength characteristic of about 850 - 960 nm wavelength in near infrared for eliminating influences of disturbance light and the like.

The blood-vessel light source 32 is desirable to be an LED or the like, which has a wavelength characteristic of about 850 - 960 nm wavelength in near infrared, considering an effect of enhancing the contrast in the imaging screen generated by absorption of hemoglobin in blood vessels, resistance for the disturbance light, and the like.

Further, it is also possible to employ a structure in which an infrared transmission filter is placed directly above the light sources for transmitting the wavelengths and eliminating the disturbance light of other wavelengths.

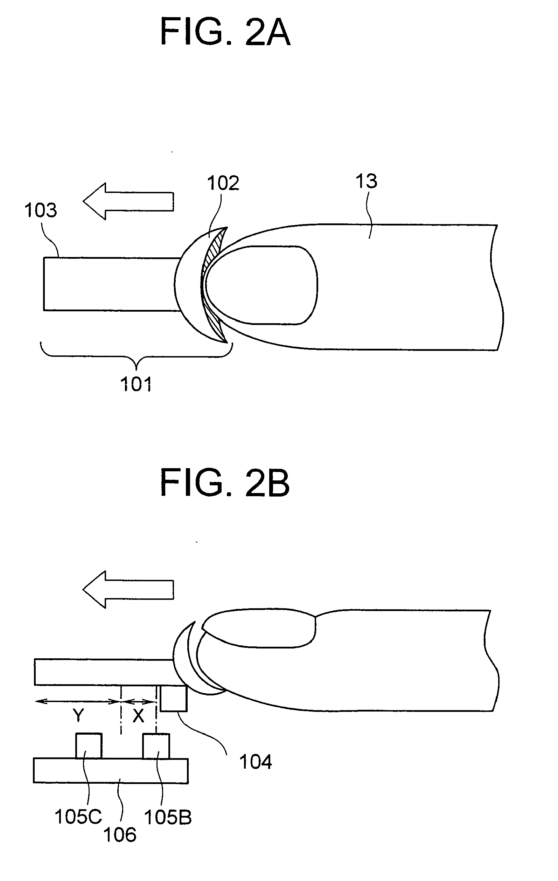

The finger guide 101 is a member which is protruded from the forward-side face of the inside the system main unit 10 towards the backward side. As shown in FIG. 2A, the finger guide 101 is configured with a finger contact part (corresponds to a finger abutment part) 102 where the fingertip of the finger 13 as the imaging target is placed, and a pressure absorption device 103 for supporting the finger contact part 102.

The finger contact part 102 has a recessed form which fits the shape of the fingertip. This makes it possible to guide the finger 13 placed on the finger contact part 102 in such a manner that the thick face thereof faces towards the imaging part 20.

The pressure absorbing device 103 is configured with an elastic spring, for example, and it displaces the position of the finger contact part 102 to the forward side when the finger 13 is placed on the finger contact part 102. Thereby, the pressuring force from the finger 13 placed on the finger contact part 102 is absorbed.

This makes it possible to lighten the distortion generated in the imaging area of the finger 13, when the finger 13 is placed on the finger contact part 102.

The pressure absorbing device 103 has a cuboid shape, and it is connected to the finger contact part 102 at its backward-side face and connected to the forward inner-side face of the system main unit 10 at its opposite-side (forward-side) side face. The pressure absorbing device 103 has a structure which shrinks along the forward-and-backward directions of the authentication system 1. It is assumed here that the pressure absorbing device 103 herein is configured with a material of a spring structure that has elasticity.

The pressure absorbing device 103 may be configured with an elastic cushion or sponge material instead of the spring structure, as long as it has a structure which can release or absorb the pressuring force from the finger 13.

With this, the position of the finger contact part 102 on which the finger 13 is placed is shifted towards an arrow direction (forward direction) of FIG. 2A by the pressuring force from the finger 13.

As shown in FIG. 2B, on the lower-side face of the pressure absorbing device 103, there is provided the position detection target part 104 which is a detection target for detecting displacement (shift) of the position of the finger contact part 102.

The position detection target part 104 may also be provided on the lower side of the finger contact part 102 (finger abutment part). Thereby, the position detecting devices 105B and 105C can directly detect the position of the finger contact part 102. In that case, the position detection target part 104 corresponds to the finger abutment part.

The position detection target part 104 is configured with a magnetic substance such as a magnetic ink or an iron chip, for example.

The position detecting devices 105B and 105C for detecting the shifted position of the position detection target part 104 are provided on the upper-side face of the position detector supporting device 106. In this case, as shown in FIG. 2B, the position detecting device 105B is placed on the backward side along the longitudinal direction of the position detector supporting device 106, and the position detecting device 105C is placed on the forward side. Further, signals regarding the position of the position detection target part 104 detected by the position detecting devices 105B and 105C are outputted to the imaging control device 21 of the imaging part 20.

The position detecting devices 105B and 105C (correspond to the guide position detecting part) are sensors for detecting the position of the position detection target part (to-be-detected part) 104, which detect the shifted position of the position detection target part 104 (a shifted position detecting function).

Upon detecting the position detection target part 104 in an area X in FIG. 2B, the position detecting device 105B sends a signal indicating to the imaging control device 21 that the position detection target part 104 is being detected (a position detection notifying function).

The position detection notifying function may be executed continuously at a specific interval after the position detection target part 104 is detected. Thereby, the imaging control device 21 can detect whether or not the finger is being guided to a place (imaging area) appropriate for picking up the image, and can detect the timing for picking up the image as well.

Further, the position detecting device 105B may be set to count the time with a position detection timer provided in advance when detecting that the position detection target part 104 has entered the area X, and to send a signal indicating that it is capable of picking up an image of the finger to the imaging control device 21 when the position detection target part 104 is detected for a preset length of time or longer.

As shown in FIG. 2B, when detecting the position detection target part 104 in an area Y that is set on the forward side of the area X, the position detecting device 105C sends information to the imaging control device 21 indicating that the position detection target part 104 has entered the area Y (an inappropriate-state notifying function).

Through this, the positional information in terms of the forward-and-backward directions of the pressure absorbing device 101 is notified to the imaging control device 21. Therefore, the imaging control device 21 can detect how far the finger guide 101 is being pushed in by the finger 13 as the target of picking up the image.

The position detecting devices 105B and 105C may simply need to be in a structure which can detect the current position of the position detection target part 104 or detect how much the position of the position detection target part 104 is being shifted.

Now, there is described a case where the position of the position detection target part 104 of the finger guide 101 is displaced by the pressuring force of the finger.

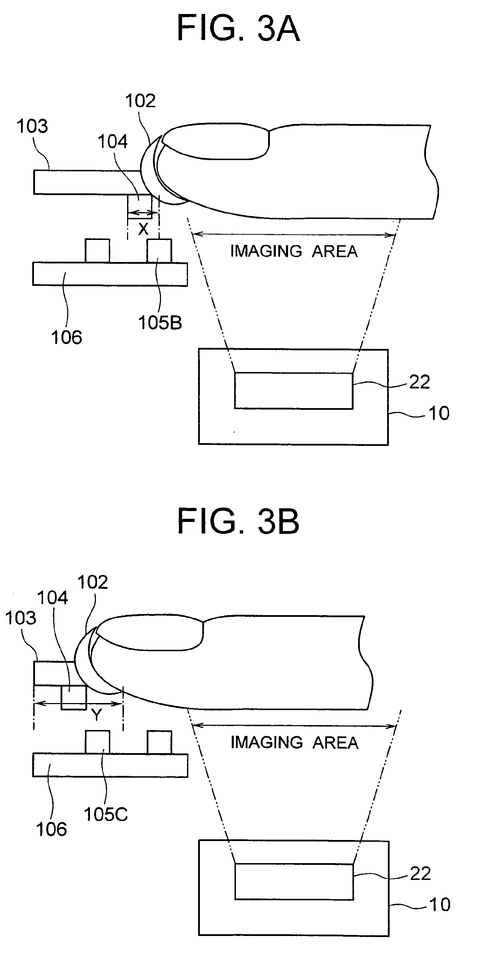

As shown in FIG. 3A, the position detection target part 104 is detected within the area X, because the pressure absorbing device 103 is contracted by the pressuring force of the finger 13. Here, the position detecting device 105B notifies the imaging control device 21 that the position detection target part 104 is detected within the area X.

At this point, the imaging control device 21 starts up the position detecting timer of the imaging control device 21. The imaging control device 21 picks up an image of the finger 13, when the position detection target part 104 is detected within the area X during a period until the time measured by the position detecting timer reaches preset time.

As shown in FIG. 3A, the fingerprint area in the finger 13 at this point matches with an imaging area of an imaging device 22. Thus, the finger 13 is considered to be guided to a position that is optimum for picking up the image in terms of the forward-and-backward position.

At this time, the pressuring force by the finger 13 is absorbed by the pressure absorbing device 103, so that there is no fingerprint distortion generated in the fingerprint area of the finger 13, which may otherwise be generated by the contact with the finger contact part 102. Therefore, it is possible for the imaging part 10 to pick up images of the fingerprint and the finger blood vessel pattern with high authentication accuracy.

With this, the imaging control device 21 of the imaging device 20 can detect that the imaging area of the finger 13 as the imaging target is being guided to the position appropriate for picking up the image, and can pick up the image at the finger position and at the timing suited for picking up the image.

Further, this makes it possible in this exemplary embodiment to define an imaging range of the fingerprint in the positions (forward-and-backward positions) along the forward-and-backward directions (fingertip-and-joint directions). Therefore, the imaging device 20 can pick up a finger image with high accuracy, which is suited for making judgment for performing image authentication.

In the meantime, FIG. 3B shows a case where a position detection target part 104 is detected by the position detecting device 105C in the area Y.

Here, the position detecting device 105C detects the position detection target part 104 in the area Y and, at the same time, sends information to the imaging control device 21 indicating that the finger guide 101 is being pushed excessively.

In this case, the part of the finger 13 in contact with the finger contact part 102 has distortion, because it is strongly pressed against the finger guide 101. Thus, the authentication accuracy of the finger is being deteriorated. Further, as shown in FIG. 3B, it is being shifted out from the imaging area of the imaging device 22 towards the forward side.

In this case, the imaging control device 21 may show an indicator on the output part 28, such as "touch the guide lightly". This makes it possible to give an instruction to the user not to push in the finger guide 101 too strongly.

Now, there is described a case where the position detection target part 104 is an iron piece that is a magnetic substance, and the position detecting devices 105B and 105C are set as MR sensors for detecting the magnetic substance.

Specifically, the position detecting devices 105B and 105C are connected in series as magnetoresistive elements (referred to as "MR element") of a same characteristic. Further, an output terminal is provided to a connection between the position detecting device (MR element) 105B and the position detecting device (MR element) 105C, and a voltage (output voltage) generating at the output terminal is notified to the imaging control device 21. The output terminal is provided on the top face of the position detector supporting device 106.

Further, a voltage V is applied to both ends of the MR elements 105B and 105C which are connected in series. Furthermore, a magnet is provided within the position detector supporting device 106 for applying a uniform magnetic field to the MR elements 105B and 105C.

As shown in FIG. 3A, when the position detection target part (iron piece) 104 is closer to the MR element 105B, a larger magnetic field is applied to the position detecting device 105B than to the position detecting device 105C. Thereby, a resistance value of the position detecting device 105B is increased, so that the output voltage becomes higher.

In this exemplary embodiment, the imaging control device 21 picks up an image of the guided finger 13, when the output voltage of the position detecting device (MR element) 105B is larger than a value set in advance, and the value is maintained for a specific length of time.

Further, as shown in FIG. 3B, when the position detection target part (iron piece) 104 comes to be in a state closer to the MR element 105C, the output voltage of the position detecting device 105C becomes higher than the value that is set in advance. Therefore, the imaging control device 21 executes processing for outputting an indicator on the output part 28, such as "touch the guide lightly".

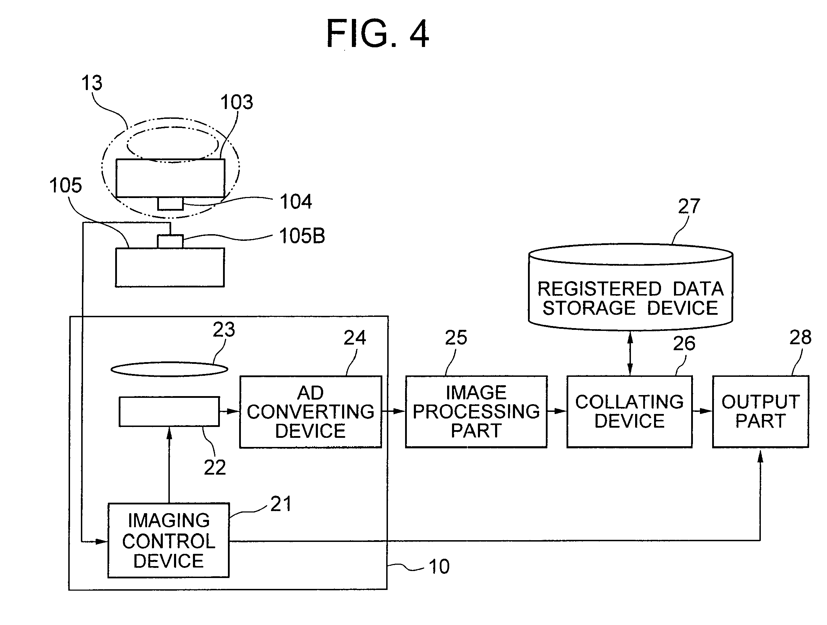

The imaging part 10 is a camera device for picking up the image of the finger 13. As shown in FIG. 4, the imaging part 10 is configured with: the imaging control device 21 for controlling finger imaging processing of the imaging part 10; the imaging device 22 including an imaging element; an imaging lens 23 for picking up images; and the AD converting device 24 which converts picked-up image information into digital information, and outputs the converted information.

Further, as described above, the biological feature input device 1 of this exemplary embodiment includes, on the outers side of the system main unit 10: the image processing device 25; the collating device 26; the registered data storage device 27; and the output part 28.

The imaging device 22 is configured with an image sensor such as a CCD or a CMOS. The imaging lens 23 reflects an imaging target area including the fingerprint area of the finger 13 on the imaging device 22. The AD converting device 24 converts the image of the finger 13 reflected and picked up by the imaging device 22 into image data x of the digital information, and sends it to the image processing device 25 (an image converting/transmitting function).

The AD converting device 24 includes a memory for loading the images, and a processor for executing the image converting/transmitting function according to a program that is set in advance.

The image processing device 25 has a memory that is set in advance. The image processing device 25 loads the image data x into the memory, and performs processing for generating image feature extracted data y by extracting image feature such as the fingerprint or the blood vessel pattern from the image data x according to the program set in advance (an extracted data generating function). Further, for the picked-up biological feature, the image processing device 25 uses the finger blood vessel, the fingerprint, or the biological feature containing a plurality of those is used as the image data x, and generates the image feature extracted data y from the image data x.

The image processing device 25 is structured to have a processor for executing the extracted data generating function.

Further, the collating device 26 mutually collates the registered image data that is registered in advance to the registered data storage part 27 with the image feature extracted data y that is generated by the image processing device 25 (an image collating function), and makes judgment regarding individual authentication based on the collation result (an individual authentication judging function).

Furthermore, the collating device 26 executes processing for outputting the execution result of the individual authentication judging function to the output part 28 (an authentication result outputting function).

The collating device 26 is structured to have a processor which executes the image collating function and the individual authentication judging function by the program set in advance.

### (Explanation regarding Operations of Exemplary Embodiment)

Next, operations of the authentication system 1 according to the exemplary embodiment will be described.

First, the finger 13 of the user is placed on the finger guide 101, and the position of the finger abutment part 102 that is the contact part of the finger guide 101 with the finger 13 is displaced. Then, the position of the finger abutment part 102 is detected. An image of the finger 13 is picked up when the position detection target part 104 showing the position of the finger abutment part is detected in an area that is set in advance.

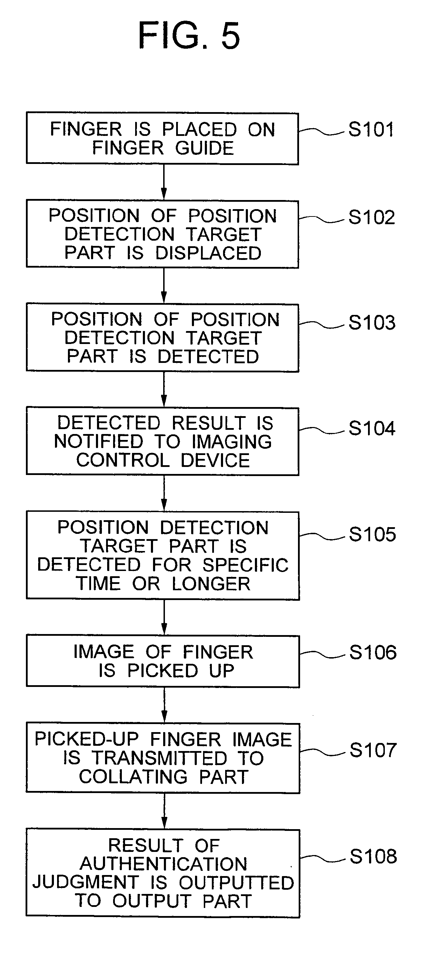

Hereinafter, detailed explanations will be provided by referring to a flowchart of FIG. 5.

First, the finger 13 of the user is placed on the finger guide 101 (step S101). Here, the thick of the finger 13 placed on the finger contact part 102 is guided to the direction which faces towards the imaging device 22.

The pressure absorbing device 103 becomes contracted because of the pressuring force from the finger 13, and the positions of the finger contact part 102 and the position detection target part 104 are displaced to the forward direction (step S102).

Then, the position of the position detection target part 104 is detected by the position detecting device 105B (step S103). The position detecting devices 105B and 105C constantly perform detections of the position detection target part 104 at a specific time interval.

When the position of the position detection target part 104 is closer to the position detecting device 105 or while the position detection target part 104 is being detected within the area X (FIG. 2B), the position detecting device 105 sends information to the imaging control device 21 indicating that the position detection target part 104 is being detected (step S104).

At this time, the imaging control device 21 starts up the position detecting timer. When the position detection target part 104 is detected in the area X (FIG. 2B) for the length of time that is set in advance (specific time) or longer (step S105), the imaging control device 21 picks up an image of the finger 13 (step S106).

Specifically, in a case where the MR sensors including the position detecting devices 105B and 105C are provided, the output voltage from the position detecting device 105B is notified to the imaging control device 21 when the distance between the position detecting device 105B and the position detection target part 104 is closer than the distance between the position detecting device 105C and the position detection target part 104.

Then, when the notified voltage amount is larger than a value set in advance and the value is maintained for a specific length of time, the imaging control device 21 picks up an image of the guided finger 13.

In this case, the position detecting timer for measuring the time during which the position detection target part 104 is detected within the area X (FIG. 2B) is set inside the imaging control device 21 in advance.

Further, the position detecting device 105B may be set to send a signal to the imaging control device 21 indicating that it is possible to pick up an image of the guided finger 13, when the position detection target part 104 is detected within the area X (FIG. 2B) for the time set in advance or longer.

When the position detection target part 104 is detected in the area Y, the position detecting device 105C sends a signal to the imaging control device 21 indicating that the position detection target part 104 is being detected in the area Y. At this time, the imaging control device 21 outputs a warning such as "touch the guide lightly" to the output part 28. Thereafter, the position detecting devices 105B and 105C continue to detect the position detection target part 104 at a specific time interval.

The imaging control device 21 may be set to determine whether to pick up an image of the fingerprint, an image of the finger blood vessel, or an image of the both according to the contents inputted by the user prior to picking up the image.

Subsequently, the AD converting device 24 transmits the picked-up finger image to the image processing part 25 as the image data x. The image processing device 25 extracts the image feature of the finger image based on the transmitted image data, and transmits it to the collating device 26 as the feature image data y (step S107).

The collating device 26 performs collation of the fingerprint and the blood vessel pattern registered to the registered data storage device 27 in advance with the image feature data y (an image collating step). At the same time, the collating device 26 makes judgment regarding the authentication based on the collation result, and outputs the result to the output part 28 (step S108).

The exemplary embodiment has been described by referring to the case where the position detection target part 104 is the iron piece that is a magnetic substance, and the position detecting devices 105B and 105C are the MR sensors for detecting the magnetism. However, the way to detect the shifted position of the position detection target part 104 is not limited only to the use of the MR sensors.

As described above, with the present invention, distortion of the fingerprint caused due to the contact between the finger guide and the finger placed on the finger guide can be suppressed, so that it is possible to pick up an image of the finger by suppressing influences of the distortion. This makes it possible to improve the accuracy of the individual authentication executed by using the finger image.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

The present invention is structured to include the finger guide for guiding the finger, the device for detecting the shift of the abutment part of the finger guide, and the imaging device which picks up the image based on the detected position of the finger abutment part. Therefore, as an exemplary advantage according to the invention, it is possible to provide the biological feature input device and the biological feature input method, which make it possible to pick up the image of the finger of high authentication accuracy through effectively lightening the distortion generated in the guided finger.

### INDUSTRIAL APPLICABILITY

The present invention can be applied to individual authentication that is executed regarding the use of personal computers and the like by using fingers, and to individual authentication that is executed regarding the control of entering/leaving to/from specific rooms by using the fingers.

An example 1 describes a biological feature input device, comprising imaging means for picking up an image of a finger and finger guide means for guiding the finger to a position at which the image of the finger can be picked up, wherein:
the finger guide means is configured with finger abutment means for supporting a tip side of the finger placed on the finger guide means, and finger holding means for supporting the finger abutment means and displaces a position of the finger abutment means towards a direction the finger is pointing when the finger is placed on the finger abutment means;
the finger guide means is provided with guide position detecting means for detecting the position of the finger abutment means; and
the imaging means picks up the image of the finger when the finger abutment means is detected at a position that is set in advance.

An example 2 describes the biological feature input device as described in the example 1, wherein:
the finger holding means comprises to-be-detected means for showing the position of the finger abutment means in the direction the finger is pointing; and
the guide position detecting means comprises position detecting means for detecting a shifted position of the to-be-detected means.

An example 3 describes the biological feature input device as described in the example 1, wherein the finger holding means is formed with a spring member or a cushion member made with a material that has elasticity.

An example 4 describes the biological feature input device as described in the example 2, comprising:
the to-be-detected means formed with a magnetic member; and

MR sensor means, including a magnetoresistive element to which a voltage is supplied, for detecting the position of the to-be-detected means based on an output voltage from the magnetoresistive element.

An example 5 describes the biological feature input device as described in any one of examples 1 - 4, wherein a biological feature to be picked up is a finger blood vessel, a fingerprint, or a biological feature containing a plurality of those.

An example 6 describes a biological feature input method which picks up an image of a finger by using imaging means for picking up the image of the finger and finger guide means for guiding the finger to a position to be placed, the method comprising:
absorbing a pressuring force applied to the finger guide means when the finger is placed on the finger guide means;
detecting a position of the finger guide means after absorbing the pressuring force; and
picking up the image of the finger, when the finger guide means is in an area that is set for picking up the image of the finger.

## Claims

1. A biological feature input device, comprising imaging means for picking up an image of a finger and finger guide means for guiding the finger to a position at which the image of the finger can be picked up, wherein:
the finger guide means is configured with finger abutment means for supporting a tip side of the finger placed on the finger guide means, and finger holding means for supporting the finger abutment means and displaces a position of the finger abutment means towards a direction the finger is pointing when the finger is placed on the finger abutment means;
the finger guide means is provided with guide position detecting means for detecting the position of the finger abutment means; and
the imaging means picks up the image of the finger when the finger abutment means is detected at a position that is set in advance.

2. The biological feature input device as claimed in claim 1, wherein:
the finger holding means comprises to-be-detected means for showing the position of the finger abutment means in the direction the finger is pointing; and
the guide position detecting means comprises position detecting means for detecting a shifted position of the to-be-detected means.

3. The biological feature input device as claimed in claim 1, wherein the finger holding means is formed with a spring member or a cushion member made with a material that has elasticity.

4. The biological feature input device as claimed in claim 2, comprising:
the to-be-detected means formed with a magnetic member; and
MR sensor means, including a magnetoresistive element to which a voltage is supplied, for detecting the position of the to-be-detected means based on an output voltage from the magnetoresistive element.

5. The biological feature input device as claimed in any one of claims 1-4, wherein a biological feature to be picked up is a finger blood vessel, a fingerprint, or a biological feature containing a plurality of those.

6. A biological feature input method which picks up an image of a finger by using imaging means for picking up the image of the finger and finger guide means for guiding the finger to a position to be placed, the method comprising:
absorbing a pressuring force applied to the finger guide means when the finger is placed on the finger guide means;
detecting a position of the finger guide means after absorbing the pressuring force; and
picking up the image of the finger, when the finger guide means is in an area that is set for picking up the image of the finger.
